# EUROPEAN PATENT SPECIFICATION

(11) **EP 3 318 415 B1**
(45) Date of publication and mention of the grant of the patent: **16.08.2023**
(21) Application number: 16197069.4
(22) Date of filing: 03.11.2016
(51) Int. Cl.: B60B 33/00, B60B 33/02

(54) **A LOCKABLE WHEEL ASSEMBLY**
VERRIEGELBARE RADANORDNUNG
ENSEMBLE ROUE VERROUILLABLE

(43) Date of publication of application: 09.05.2018
(73) Proprietor: Gaskari, Jalil, 723 43 Västerås (SE)
(72) Inventor: Gaskari, Jalil, 723 43 Västerås (SE)
(74) Representative: Swea IP Law AB

(56) References cited:
- EP-A1- 1 335 837
- DE-U1- 29 704 204
- FR-A1- 2 488 190
- US-A- 2 583 858
- US-A- 4 349 938
- US-A1- 2010 107 361
- US-A1- 2012 038 123

## Description

### Field of the invention

The present invention relates to a wheel assembly comprising a wheel and a locking mechanism capable of locking the wheel in a plurality of predefined directions.

### Background of the invention

A wheel assembly comprises of a body including an attachment portion for attaching the wheel assembly to an object, a wheel house rotatably connected to the body about a first rotational axis, and a wheel rotatably connected to the wheel house about a second rotational axis perpendicular to the first rotational axis. This type of wheel assemblies are often denoted as pivot wheels or caster wheels.

A problem with conventional caster wheels is that when they are mounted to a large and/or heavy object, the object may become difficult to stir, especially if a person is pushing the object from behind and the object is to be moved through a narrow passage. If the object is not pushed in a perfect direction through the narrow passage, the wheels attached to the front of the object may start stirring the object in a wrong direction. If the object is heavy, changing that direction may be difficult without having to push the object backward first. One solution to this problem is to have two persons at the front of the object stirring the front part and one person at the back of the object stirring the back part. However, this requires additional personnel resources, which are not always possible to obtain.

A known solution to this problem is to fixedly attach one or more wheels to the front of the object. Consequently, only the rear wheels can change direction and the object will become much easier to stir. The problem with this solution is that the movement of the object becomes less flexible, for example, when trying to place the object between two other objects perpendicular to the direction of the fixed wheels.

This can be solved by a locking mechanism adapted to lock the wheel house in relation to the body in a plurality of predefined positions. Such locking mechanism is called a swivel lock and can, for example, be seen in http://www.casterconcepts.com/all-casters/casteroptions/swivel-locks/. The swivel lock comprises a locking element attached to the underside of an attachment portion and adapted to engage with plurality of recesses of a locking part attached to the wheel house. The wheel house is rotatable in relation to the attachment portion. This solution enables the caster wheel to be locked and unlocked in a plurality of directions. A disadvantage of this solution is that in order to lock the wheel in a desired direction, the wheel house has to be rotated in relation to the object attached to the wheel assembly. This can be difficult if the object is large and/or heavy. One way to change the direction of the wheel and to lock it, is to push the object backwards or forwards in the wanted wheel rotation direction, which will line up the wheels in that direction. When the wheels are in the right direction, the first locking element can be engaged in one of the recesses. Pushing the object backwards or forwards in the right direction can be difficult if the wheels direction needs to be changed in a narrow passage and it can also be difficult to get all the wheels to line up perfectly, which is necessary if they are to be locked in one and the same direction.

FR2488190A1 discloses a stop for locking a castor into at least one predetermined position.

### Object and summary of the invention

It is an object of the present invention to at least partly overcome the above problems, and to improve the locking mechanism of the wheel assembly.

This object is achieved by a wheel assembly as defined in claim 1.

The wheel assembly comprises an attachment portion for attaching the wheel assembly to an object, a wheel house rotatably connected to the attachment portion about a first rotational axis, a wheel rotatably connected to the wheel house about a second rotational axis perpendicular to the first rotational axis, and a locking mechanism adapted to lock the wheel house in relation to the attachment portion in a plurality of predefined positions. The locking mechanism comprises a plurality of recesses and a locking element is arranged rotatable in relation to the recesses. The locking element is adapted to engage with the recesses when the wheel house and the attachment portion are in the predefined positions in relation to each other.

The locking element is arranged rotatable in relation to the attachment portion about the first rotational axis. The locking element is directly or indirectly connected to the wheel house so that a rotational movement of the locking element achieves a corresponding rotational movement of the wheel house, and at least a part of the locking element is movable in a direction parallel with the first rotational axis to allow the part of the locking element to move into the recesses and to engage with the recesses when the wheel house and the attachment portion are in the predefined positions in relation to each other.

A user can lock the wheel in a desired direction by first rotating the wheel using the locking element so that the locking element is below one of the recesses in the attachment portion, and then the locking element is moved upward until the locking element is engaged into the recess. An advantage with the wheel assembly according to the present invention is that it is easy to change the direction of the wheel, and easy to lock the wheel in a desired direction. Because a rotational movement of the locking element achieves a corresponding rotational movement of the wheel house, the direction of the wheel house can be modified by rotating the locking element. Thus, it is not necessary to move the object backward and forward in the wanted wheel rotation direction in order to lock it in that direction as in the prior art. A part of the locking element is movable in a direction parallel with the first rotational axis to engage with the recesses when the wheel house and the attachment portion are in the predefined positions in relation to each other. This feature allows the wheel house to be easily locked in the wanted direction.

The at least a part of the locking element is resilient in a direction parallel with the first rotational axis to allow the part of the locking element to move into the recesses and to engage with the recesses when the wheel house and the attachment portion are in the predefined positions in relation to each other. This facilitates the movement of the locking element in and out of the recesses.

The locking element is elongated and linearly movable in relation to the wheel house in a direction perpendicular to the first rotational axis. Thus, the length of a portion of the locking element protruding from the wheel house can be adjusted. Accordingly, the locking element can be moved between an extended position and a retracted position. It is advantageous to have the locking element in the retracted position when the locking element is not used in order to avoid that the locking element protrudes from the wheel assembly. By moving the locking element to the extended position, the locking element will function as a lever and less force will be needed to rotate the wheel house in relation to the object in order to move the locking element to one of the recesses.

This is also an advantage when the locking element is partly resilient, considering that the flexibility of the resilient part depends on the material and the length of the resilient part. In order to allow the locking element to be movable from the recesses, the part that is not directly supported by the wheel must be long enough or the material of the resilient part must be resilient enough. Therefore, moving the elongated element in one direction will make the resilient part more resilient, and moving the elongated element in the opposite direction will make the resilient part less resilient and reduce the possibility that the locking element falls out from the recess.

According to an embodiment of the invention, the recesses are located in the attachment portion. This allows for an uncomplicated solution to lock the wheel house to the attachment portion.

According to an embodiment of the invention, the wheel house comprises a wheel bracket, the locking mechanism comprises a hollow locking part fixedly connected to the wheel bracket so that a space is formed between an upper portion of the locking part and the wheel bracket. The locking element is adapted to be inserted in this space to allow the wheel house to be rotated upon rotation of the locking element. The space created by the locking part can be made so that the locking element is movable in relation to the locking part and the wheel bracket. Suitably, the locking element is elongated and linearly movable in relation to the locking part in a direction perpendicular to the first axis.

According to an embodiment of the invention, the locking element is removably connected to the locking part, and when the locking element is removed the wheel is freely rotatable in 360°. This feature makes it possible to easily change the wheel to work as a conventional caster wheel.

According to an embodiment of the invention, the locking part comprises two protruding parts protruding from the upper portion, and the protruding parts are attached to the wheel bracket so that the space is formed between the locking part and the wheel bracket.

According to an embodiment of the invention, the wheel assembly comprises an engagement element including the recesses, and an elongated element arranged rotatable in relation to the engagement element about the first axis. The elongated element has an upper end connected to the locking element and a lower end attached to the wheel house. The attachment portion comprises through holes adapted to enclose a part of the elongated element and to allow the elongated element to rotate in relation to the engagement element. This embodiment makes it possible to rotate the wheel house in relation to the attachment portion at a distance from the wheel house. This is, for example, advantageous for movable beds in a hospital.

According to an embodiment of the invention, the wheel house comprises a first rotation part adapted to engage with a second rotation part, and the second rotation part is attached to the lower end of the elongated element.

According to an embodiment of the invention, the wheel assembly comprises a handle connected to the elongated element, and the handle has a pushing element adapted to push down the locking element and to allow the rotation of the locking element. The pushing element and the handle allow for an easy way of rotating the wheel since the user only needs one hand to rotate the wheel, while the other hand can be used to hold the object steadily or, if that's not a problem, two wheels can be rotated at the same time with one hand on each handle.

### Brief description of the drawings

The invention will now be explained more closely by the description of different embodiments of the invention and with reference to the appended figures.
Fig. 1 shows an exploded view of a wheel assembly according to a first embodiment of the invention.
Fig. 2 shows a perspective view of the wheel assembly according to the first embodiment of the invention with a locking element in a first recess.
Fig. 3 shows a perspective view of the wheel assembly according to the first embodiment of the invention with the locking element in a second recess.
Fig. 4 shows a perspective view of a wheel assembly according to a second embodiment of the invention.
Fig. 5 shows a perspective view of a wheel assembly with a removed locking element.
Fig. 6 shows an exploded view of a wheel assembly according to a third embodiment of the invention.
Fig. 7 shows a perspective view of a wheel assembly according to a fourth embodiment of the invention.

### Detailed description of preferred embodiments of the invention

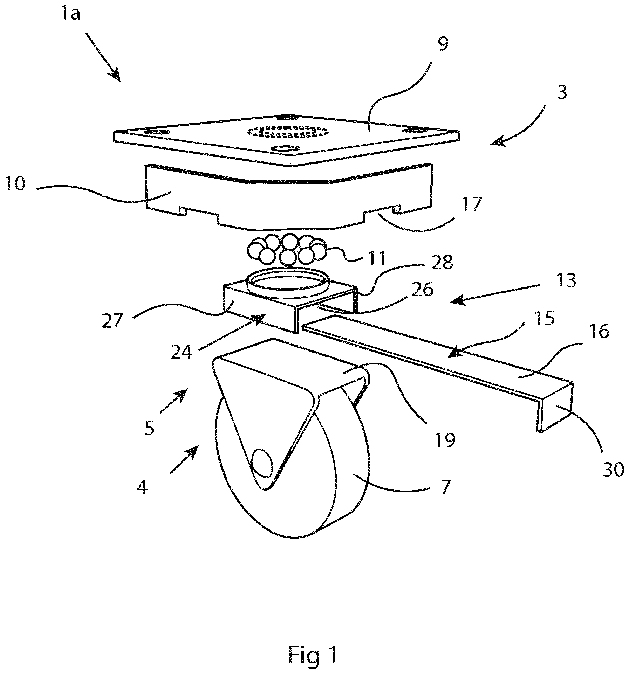

Figures 1, 2 and 3 show a first embodiment of a wheel assembly 1a according to the invention. Figure 1 shows an exploded view of the wheel assembly. The wheel assembly 1a comprises an attachment portion 3 and a wheel unit 4 including a wheel house 5 and a wheel 7. The attachment portion 3 includes an attachment element 9 adapted to attach the wheel assembly 1a to an object and an engagement element 10 fixedly connected to the attachment element 9. The wheel unit 4 is rotatably connected to the attachment portion 3 by the means of bearings 11 and is rotatable about a first rotational axis A1. The wheel 7 is rotatably connected to the wheel house 5 about a second rotational axis A2 perpendicular to the first rotational axis A1.

The wheel assembly 1a further comprises of a locking mechanism 13 adapted to lock the wheel unit 4 in relation to the attachment portion 3 in a plurality of predefined positions. The locking mechanism 13 comprises a locking element 15 and a plurality of recesses 17. The term recesses also covers different types of indentations and notches. The locking element 15 is arranged rotatable in relation to the recesses 17 about the first rotational axis. The locking element locks the wheel unit 4 to the attachment portion 3 by engagement with one of the recesses 17. In this embodiment, the recesses 17 are disposed in the engagement element 10 of the attachment portion 3. In this embodiment, the engagement element 10 is a framework arranged along the periphery of the attachment element 9 and protruding from the attachment element 9 towards the wheel unit 4, and the recesses 17 are designed as notches in the lower end of the engagement element 10.

The locking element 15 is arranged rotatable in relation to the attachment portion 3 about the first rotational axis. The locking element 15 is directly or indirectly connected to the wheel unit 4 so that by rotating the locking element 15, the wheel unit 4 receives a corresponding rotational movement. The locking element is elongated. The locking element 15 is movable in relation to the wheel unit 4 in a direction perpendicular to first rotational axis A1 and along the longitudinal axis of the locking element 15. A part 16 of the locking element protrudes from the wheel house 5. The protruding part 16 of the locking element 15 is movable in a direction parallel with the first rotational axis A1 in order to allow the protruding part 16 to move in and engage with the recesses 17 and thereby lock the wheel unit to the attachment portion, and to move out of the recess in order to release locking of the wheel unit and the attachment portion. The locking element 15 can either be removably attached to the wheel house 5 or can be attached to the wheel house in a way that prevents it from being removed.

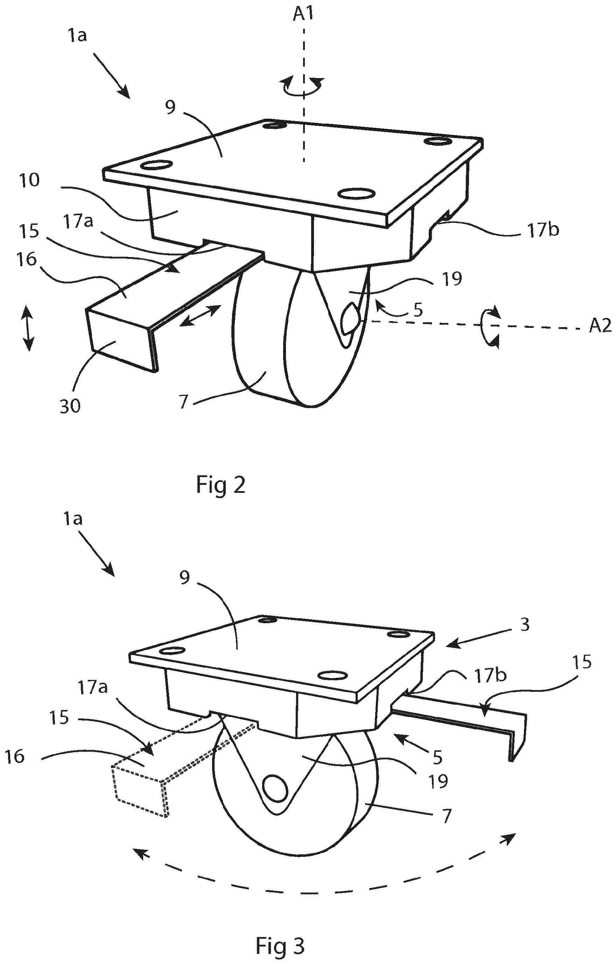

The recesses 17 are arranged above the locking element 15 in relation to the wheel unit 4, and the recesses are designed to receive the locking element from below. The locking element 15 extends through the recess 17 when the locking element is engaged to the recess, as shown in figure 2 and 3. The locking element is removed from the recesses by pressing the locking element towards the wheel unit 4.

In the embodiment shown in figures 1-3, the locking mechanism 13 is situated between the attachment element 9 and the wheel unit 4. The wheel house 5 comprises a wheel bracket 19. The wheel 7 is rotatably attached to the wheel bracket 19. In this embodiment, the attachment portion 3 comprises a first recess 17a and a second recess 17b.

In this embodiment, the locking mechanism 13 comprises a locking part 24 attached to the wheel bracket 19. The locking part 24 is hollow and defines a space 26 adapted to receive a rear portion of the locking element 15 and by that connect the locking element to the wheel house. The locking element 15 is movable in relation to the wheel house 5 along the longitudinal axis of the locking element 15. Thus, the length of the protruding part of the locking element can be adjusted. The protruding part constitutes a lever that facilitates the rotational movement of the wheel unit 4.

The locking part 24 is U-shaped and comprises of two protruding elements 27, 28 protruding from an upper portion of the locking part, and attached to the wheel bracket 19. The locking part 24 and an upper portion of the wheel bracket 19 defines the space 26. This embodiment allows the wheel unit 4 to directly engage with the attachment portion 3 by means of the locking element 15. Thereby, the wheel unit 4 is prevented from rotating in relation to the attachment portion 3 when the locking element 15 is engaged in one of the recesses 17a, 17b. Figure 2 shows the wheel assembly with the locking element 15 in the first recess 17a and figure 3 shows the wheel assembly with the locking element 15 in the second recess 17b.

The locking element 15, or a part of the locking element, is be resilient to enable the protruding part 16 of the locking element to be movable in a direction parallel with the first rotational axis A1. For example, the locking element can be made of a resilient material, such as plastic or metal, for example, iron, aluminum or an alloy thereof. The design of the locking element can also enable it to be resilient, for example, the length, width, and thickness of the locking element. The locking element is arranged on the same vertical distance from the wheel as the recesses. The locking element extends from the protruding element in a horizontal direction so that the locking element can extend through the recesses when the locking element is untensioned. As shown in figure 3, the locking element can be removed from the first recess 17a by pushing down the protruding part 16 of the locking element so that it leaves the first recess 17a, and then rotating the locking element to the second recess 17b and releasing it. Due to the fact that the locking element is resilient, the protruding part 16 of the locking element will automatically move into the recess when the user releases the locking element 15.

In another embodiment the locking element 15 can also be inflexible. If the locking element is inflexible the locking element needs first to be pulled out at a distance so that a part of the locking element 15 moves downward towards the wheel 7 due to the gravity. The locking element 15 can then be rotated to the second recess 17b and pushed in so to lock itself to the recess.

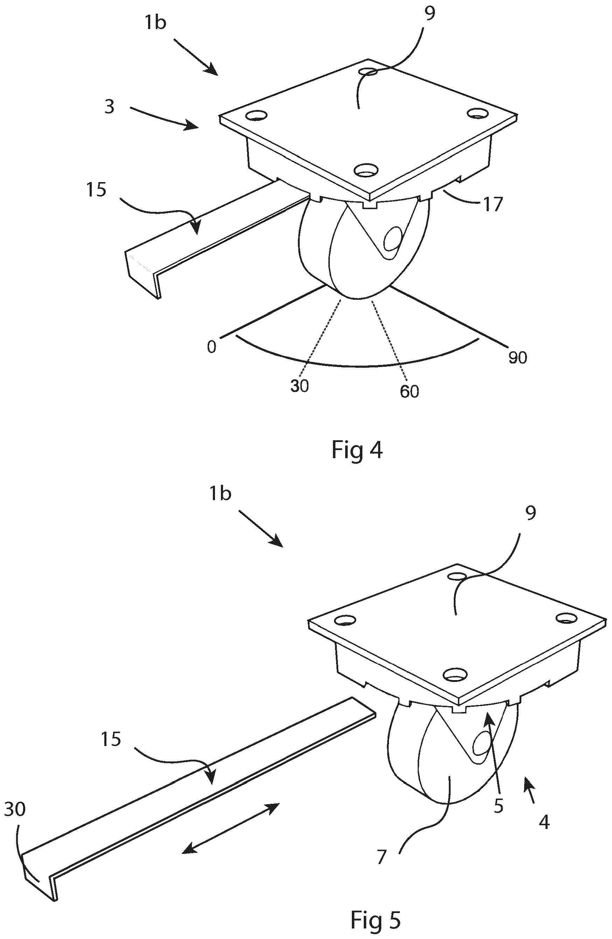

Fig 4 shows an embodiment of a wheel assembly 1b comprising an attachment portion 3 having four recesses 17. The locking element 15 is adapted to engage in the recesses. The wheel unit 4 will therefore be lockable in four different directions.

Fig 5 shows the wheel assembly 1b wherein the locking element 15 is removed from the wheel house 5 and the wheel 7 is freely rotatable in 360°. In this embodiment the locking element 15 is removed and inserted by pulling or pushing the locking element in a direction perpendicular to the first rotational axis and along the longitudinal axis of the locking element. One end of the locking element 15 is bent in an angle so that it forms a handle 30 adapted to facilitate the pulling out and pulling in of the locking element 15.

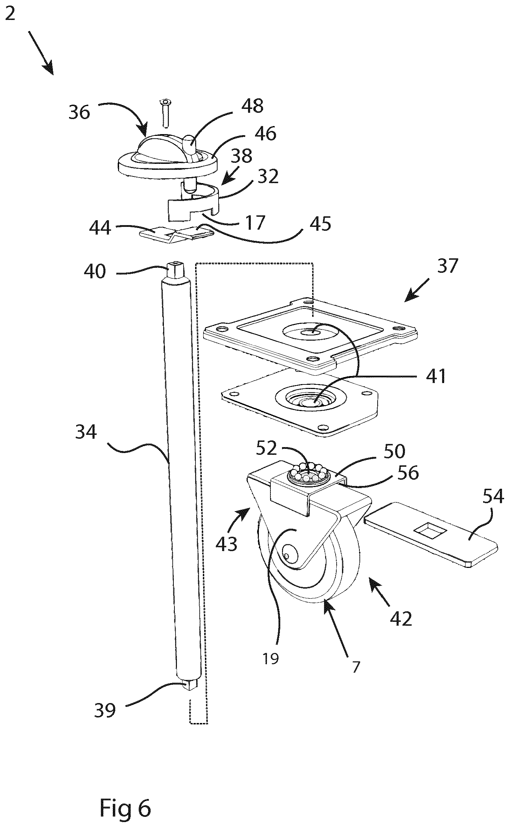

Fig 6 shows an exploded view of one embodiment of a wheel assembly 2, wherein the wheel assembly 2 comprises of an engagement element 32, an elongated element 34, a rotatable handle 36, a first attachment portion 37 and an locking mechanism 38. The elongated element 34 has a lower end 39 directly or indirectly connected to the wheel house and an upper end 40 directly or indirectly connected to the locking mechanism 38. The elongated element 34 is partly enclosed by the object that the wheel assembly 2 is adapted to move. The first attachment portion 37 is attached to the underside of the object and comprises of a plurality of first through holes 41, which enclose a part of the elongated element 34. A wheel unit 42 comprising a wheel house 43 and a wheel 7 is connected to the elongated element 34, so a rotation of the elongated element 34 receives the same rotation of the wheel unit 42. The locking mechanism 38 comprises the recesses 17 and a locking element 44. The locking element 44 is directly attached to the elongated element 34 upper end 40 and the engagement element 32 is positioned over the locking element 44.

The engagement element 32 comprises the recesses 17. The engagement element 32 is fixed in a positon in relation to the object and might be attached to e.g. the rotatable handle 36 or a housing (not shown) surrounding the locking mechanism 38 and attached to the object. The rotatable handle 36 is rotatable about the first rotational axis and is rotatably connected to a second attachment portion 46 that is fixed in a position in relation to the object. The second attachment portion 46 is directly or indirectly connected to the object by means of e.g. the housing. The rotatable handle 36 comprises a pushing element 48. When the pushing element is pushed the pushing element is pressing down a part 45 of the locking element 44 in a direction which allows the locking element and the wheel unit 42 to be rotated. In the embodiment shown in figure 6 the wheel unit 42 comprises said wheel bracket 19 attached to the wheel 7 and a first rotation part 50 attached to the wheel bracket 19. The first rotation part 50 comprises of a second through hole 52 adapted to enclose a part of the elongated element 34. The wheel house 43 further comprises a second rotation part 54 inserted in a space 56 formed between the first rotation part 50 and the wheel bracket 19. The second rotation part 54 is fixedly attached to the lower end 39 of the elongated element 34. By rotating the elongated element 34 the second rotation part 54 rotates and engages with the first rotation part 50 which in turn rotates the wheel unit 42.

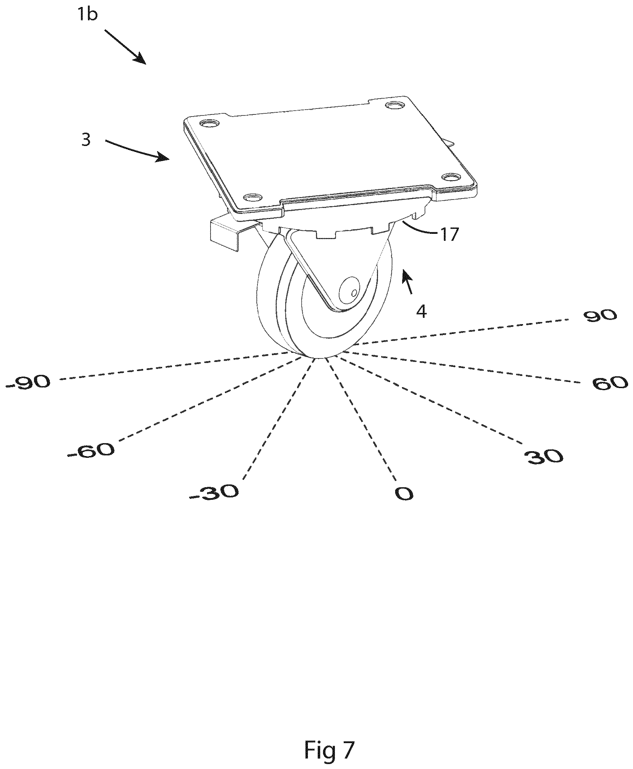

Fig 7 shows an embodiment of a wheel assembly 1c wherein the wheel assembly has an attachment portion 3 having seven recesses. The locking element 15 is adapted to engage in the recesses. The wheel unit 4 will therefore be lockable in seven different directions.

The present invention is not limited to the embodiments disclosed but may be varied and modified within the scope of the following claims. For example, the number of recesses and the design of the recesses can vary, and the length and the design of the locking element can vary.

## Claims

1. A wheel assembly (1a;1b;1c;2), wherein the wheel assembly comprises:
- an attachment portion (3;37) for attaching the wheel assembly to an object,
- a wheel house (5;43) rotatably connected to the attachment portion (3;37) about a first rotational axis (A1),
- a wheel (7) rotatably connected to the wheel house (5;43) about a second rotational axis (A2) perpendicular to the first rotational axis, and
- a locking mechanism (13;38) adapted to lock the wheel house (5;43) in relation to the attachment portion (3;37) in a plurality of predefined positions, and the locking mechanism (13;38) comprises a plurality of recesses (17) and a locking element (15;44) arranged rotatable in relation to the recesses, and the locking element (15;44) is adapted to engage with the recesses (17) when the wheel house (5;43) and the attachment portion (3;37) are in the predefined positions in relation to each other, wherein the locking element (15;44) is arranged rotatable in relation to the attachment portion (3;37) about the first rotational axis, the locking element (15;44) is connected to the wheel house (5;43) so that a rotational movement of the locking element (15;44) achieves a corresponding rotational movement of the wheel house (5;43), and at least a part (16;45) of the locking element (15;44) is movable in a direction parallel with the first rotational axis to allow said part (16;45) of the locking element to move into the recesses and to engage with the recesses when the wheel house and the attachment portion are in the predefined positions in relation to each other, wherein said at least a part (16;45) of the locking element (15;44) is resilient in a direction parallel with the first rotational axis, **characterized in that** the locking element (15;44) is elongated and linearly movable in relation to the wheel house (5;43) in a direction perpendicular to the first rotational axis.

2. The wheel assembly according to any of the previous claims, wherein the recesses (17) are located in the attachment portion (3).

3. The wheel assembly according to any of the previous claims, wherein the wheel house (5) comprises a wheel bracket (19), the locking mechanism (13) comprises a hollow locking part (24) fixedly connected to the wheel bracket (19) so that a space (26) is formed between an upper portion of the locking part (24) and the wheel bracket (19), and the locking element (15) is adapted to be inserted in this space (26) to allow the wheel house (5) to be rotated upon rotation of the locking element (15).

4. The wheel assembly according to claim 3, wherein the locking element (15) is removably connected to the locking part (24), and when the locking element (15) is removed, the wheel (7) is freely rotatable in 360°.

5. The wheel assembly according to claim 3 wherein the wheel house (5) comprises the locking part (24), and the locking part (24) is rotatably connected to the attachment portion (3) by means of bearings (11).

6. The wheel assembly (2) according to any of the claims 1 - 2, wherein the wheel assembly comprises:
- an engagement element (32) including said recesses (17), and
- an elongated element (34) arranged rotatable in relation to the engagement element (32) about the first axis, and having an upper end (40) connected to the locking element (44) and a lower end (39) attached to the wheel house (43), and the attachment portion (37) comprises through holes (41) adapted to enclose a part of the elongated element (34) and to allow the elongated element to rotate in relation to the engagement element (32).

7. The wheel assembly according to claim 6 wherein the wheel house (43) comprises a first rotation part (50) adapted to engage with a second rotation part (54), and the second rotation part is attached to said lower end (39) of the elongated element (34).

8. The wheel assembly according to any of the claims 6-7, wherein the wheel assembly 2 comprises a rotatable handle 36 connected to the elongated element (34), and the handle has a pushing element (48) adapted to push down the locking element (44) and to allow the rotation of the locking element.

## Patentansprüche

1. Radanordnung (1a;1b;1c;2), wobei die Radanordnung umfasst:
- einen Befestigungsabschnitt (3;37) zum Befestigen der Radanordnung an einem Objekt,
- einen Radkasten (5;43), der mit dem Befestigungsabschnitt (3;37) um eine erste Drehachse (A1) drehbar verbunden ist,
- ein Rad (7), das mit dem Radkasten (5;43) um eine zweite Drehachse (A2) senkrecht zu der ersten Drehachse drehbar verbunden ist, und
- einen Verriegelungsmechanismus (13;38), der angepasst ist, um den Radkasten (5;43) in Bezug auf den Befestigungsabschnitt (3;37) in einer Vielzahl von vordefinierten Positionen zu verriegeln, und der Verriegelungsmechanismus (13;38) eine Vielzahl von Aussparungen (17) umfasst und ein Verriegelungselement (15;44), das in Bezug auf die Aussparungen drehbar eingerichtet ist und das Verriegelungselement (15;44) angepasst ist, um mit den Aussparungen (17) in Eingriff zu stehen, wenn der Radkasten (5;43) und der Befestigungsabschnitt (3;37) in den vordefinierten Positionen in Bezug zueinander sind, wobei das Verriegelungselement (15;44) in Bezug auf den Befestigungsabschnitt (3;37) um die erste Drehachse drehbar eingerichtet ist, das Verriegelungselement (15,44) mit dem Radkasten (5,43) verbunden ist, sodass eine Drehbewegung des Verriegelungselements (15;44) eine entsprechende Drehbewegung des Radkastens (5;43) erreicht und mindestens ein Teil (16,45) des Verriegelungselements (15,44) in einer Richtung parallel zu der ersten Drehachse bewegbar ist, um es dem Teil (16,45) des Verriegelungselements zu ermöglichen, sich in die Aussparungen zu bewegen und um mit den Aussparungen in Eingriff zu stehen, wenn der Radkasten und der Befestigungsabschnitt in den vordefinierten Positionen in Bezug zueinander sind, wobei der mindestens eine Teil (16;45) des Verriegelungselements (15;44) in einer Richtung parallel zu der ersten Drehachse elastisch ist,
**dadurch gekennzeichnet, dass** das Verriegelungselement (15;44) in Bezug auf den Radkasten (5;43) in einer Richtung senkrecht zu der ersten Drehachse länglich und linear bewegbar ist.

2. Radanordnung nach einem der vorstehenden Ansprüche, wobei sich die Aussparungen (17) in dem Befestigungsabschnitt (3) befinden.

3. Radanordnung nach einem der vorstehenden Ansprüche, wobei der Radkasten (5) eine Radhalterung (19) umfasst, wobei der Verriegelungsmechanismus (13) ein hohles Verriegelungsteil (24) umfasst, das mit der Radhalterung (19) fest verbunden ist, sodass ein Raum (26) zwischen einem oberen Abschnitt des Verriegelungsteils (24) und der Radhalterung (19) ausgebildet ist, und das Verriegelungselement (15) angepasst ist, um in diesen Raum (26) eingeführt zu werden, um zu ermöglichen, dass der Radkasten (5) bei Drehung des Verriegelungselements (15) gedreht werden kann.

4. Radanordnung nach Anspruch 3, wobei das Verriegelungselement (15) mit dem Verriegelungsteil (24) entfernbar verbunden ist und wenn das Verriegelungselement (15) entfernt ist, das Rad (7) in 360° frei drehbar ist.

5. Radanordnung nach Anspruch 3, wobei der Radkasten (5) das Verriegelungsteil (24) umfasst und das Verriegelungsteil (24) mittels Lagern (11) mit dem Befestigungsabschnitt (3) drehbar verbunden ist.

6. Radanordnung (2) nach einem der Ansprüche 1 bis 2, wobei die Radanordnung umfasst:
- ein Eingriffselement (32), das die Aussparungen (17) einschließt, und
- ein längliches Element (34), das in Bezug auf das Eingriffselement (32) um die erste Achse drehbar eingerichtet ist und ein oberes Ende (40), das mit dem Verriegelungselement (44) verbunden ist, und ein unteres Ende (39) aufweist, das an dem Radkasten (43) befestigt ist, und der Befestigungsabschnitt (37) Durchgangslöcher (41) umfasst, die angepasst sind, um einen Teil des länglichen Elements (34) zu umschließen und um zu ermöglichen, dass sich das längliche Element in Bezug auf das Eingriffselement (32) dreht.

7. Radanordnung nach Anspruch 6, wobei der Radkasten (43) einen ersten Drehteil (50) umfasst, der angepasst ist, um mit einem zweiten Drehteil (54) in Eingriff zu stehen, und das zweite Drehteil an dem unteren Ende (39) des länglichen Elements (34) befestigt ist.

8. Radanordnung nach einem der Ansprüche 6 bis 7, wobei die Radanordnung 2 einen drehbaren Griff 36 umfasst, der mit dem länglichen Element (34) verbunden ist, und der Griff ein Schubelement (48) aufweist, das angepasst ist, um das Verriegelungselement (44) herunterzuschieben und um die Drehung des Verriegelungselements zu ermöglichen.

## Revendications

1. Ensemble roue (1a ; 1b ;1c ;2), dans lequel l'ensemble roue comprend :
- une partie de fixation (3 ; 37) pour fixer l'ensemble roue à un objet,
- un logement de roue (5 ; 43) relié de manière rotative à la partie de fixation (3 ; 37) autour d'un premier axe de rotation (A1),
- une roue (7) reliée de manière rotative au logement de roue (5 ; 43) autour d'un second axe de rotation (A2) perpendiculaire au premier axe de rotation, et
- un mécanisme de verrouillage (13 ; 38) adapté pour verrouiller le logement de roue (5 ; 43) par rapport à la partie de fixation (3 ; 37) dans une pluralité de positions prédéfinies, et le mécanisme de verrouillage (13 ; 38) comprend une pluralité d'évidements (17) et un élément de verrouillage (15 ; 44) agencé de façon rotative par rapport aux évidements, et l'élément de verrouillage (15 ; 44) est adapté pour venir en prise avec les évidements (17) lorsque le logement de roue (5 ; 43) et la partie de fixation (3 ;37) sont dans les positions prédéfinies l'une par rapport à l'autre, dans lequel l'élément de verrouillage (15 ; 44) est agencé de manière rotative par rapport à la partie de fixation (3 ; 37) autour du premier axe de rotation, l'élément de verrouillage (15 ; 44) est relié au logement de roue (5 ; 43) de sorte qu'un mouvement de rotation de l'élément de verrouillage (15 ; 44) réalise un mouvement de rotation correspondant au logement de roue (5 ; 43), et au moins une partie (16 ; 45) de l'élément de verrouillage (15 ; 44) est mobile dans une direction parallèle au premier axe de rotation pour permettre à ladite partie (16 ; 45) de l'élément de verrouillage de se déplacer dans les évidements et pour venir en prise avec les évidements lorsque le logement de roue et la partie de fixation sont dans les positions prédéterminées par rapport l'une à l'autre, dans lequel ladite au moins une partie (16 ;45) de l'élément de verrouillage (15 ;44) est souple dans une direction parallèle au premier axe de rotation, **caractérisé en ce que** l'élément de verrouillage (15 ; 44) est allongé et mobile linéairement par rapport au logement de roue (5 ; 43) dans une direction perpendiculaire au premier axe de rotation.

2. Ensemble roue selon l'une quelconque des revendications précédentes, dans lequel les évidements (17) sont situés dans la partie de fixation (3).

3. Ensemble roue selon l'une quelconque des revendications précédentes, dans lequel le logement de roue (5) comprend un support de roue (19), le mécanisme de verrouillage (13) comprend une partie de verrouillage creuse (24) reliée en fixation au support de roue (19) de sorte qu'un espace (26) est formé entre une partie supérieure de la partie de verrouillage (24) et le support de roue (19), et l'élément de verrouillage (15) est adapté pour être inséré dans cet espace (26) pour permettre au logement de roue (5) d'être tourné lors de la rotation de l'élément de verrouillage (15).

4. Ensemble roue selon la revendication 3, dans lequel l'élément de verrouillage (15) est relié de manière amovible à la partie de verrouillage (24), et lorsque l'élément de verrouillage (15) est retiré, la roue (7) est en rotation libre à 360°.

5. Ensemble roue selon la revendication 3, dans lequel le logement de roue (5) comprend la partie de verrouillage (24), et la partie de verrouillage (24) est reliée de manière rotative à la partie de fixation (3) au moyen de paliers (11).

6. Ensemble roue (2) selon l'une quelconque des revendications 1 à 2, dans lequel l'ensemble roue comprend :
- un élément de mise en prise (32) comportant lesdits évidements (17), et
- un élément allongé (34) agencé de manière rotative par rapport à l'élément de mise en prise (32) autour du premier axe, et ayant une extrémité supérieure (40) reliée à l'élément de verrouillage (44) et une extrémité inférieure (39) fixée au logement de roue (43), et la partie de fixation (37) comprend des trous traversants (41) adaptés pour enfermer une partie de l'élément allongé (34) et pour permettre à l'élément allongé de tourner par rapport à l'élément de mise en prise (32).

7. Ensemble roue selon la revendication 6, dans lequel le logement de roue (43) comprend une première partie de rotation (50) adaptée pour venir en prise avec une seconde partie de rotation (54), et la seconde partie de rotation est fixée à ladite extrémité inférieure (39) de l'élément allongé (34).

8. Ensemble roue selon l'une quelconque des revendications 6 à 7, dans lequel l'ensemble de roue (2) comprend une poignée rotative (36) reliée à l'élément allongé (34), et la poignée a un élément de poussée (48) adapté pour pousser l'élément de verrouillage (44) et pour permettre la rotation de l'élément de verrouillage.
